(19) Europäisches Patentamt / European Patent Office / Office européen des brevets

(11) **EP 4 219 123 A1**

(12) **EUROPEAN PATENT APPLICATION**
published in accordance with Art. 153(4) EPC

(43) Date of publication:
02.08.2023 Bulletin 2023/31

(21) Application number: 21871941.7

(22) Date of filing: 06.07.2021

(51) International Patent Classification (IPC):
$B29C\ 51/14^{(2006.01)}$    $B32B\ 27/00^{(2006.01)}$
$C09J\ 133/14^{(2006.01)}$    $C09J\ 7/22^{(2018.01)}$
$C09J\ 7/38^{(2018.01)}$

(52) Cooperative Patent Classification (CPC):
B29C 51/14; B32B 27/00; C09J 7/22; C09J 7/38;
C09J 133/14

(86) International application number:
PCT/JP2021/025423

(87) International publication number:
WO 2022/064809 (31.03.2022 Gazette 2022/13)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 23.09.2020 JP 2020158628

(71) Applicant: Soken Chemical & Engineering Co.,
Ltd.
Toshima-ku
Tokyo 171-8531 (JP)

(72) Inventor: YONEKAWA, Yuya
Sayama-shi
Saitama 350-1320 (JP)

(74) Representative: Dehns
St. Bride's House
10 Salisbury Square
London EC4Y 8JD (GB)

(54) **DECORATIVE FILM-USE ADHESIVE COMPOSITION AND APPLICATION THEREFOR**

(57) The present invention addresses the problem of providing: a pressure-sensitive adhesive composition for decorative films, and a decorative film obtained by using the pressure-sensitive adhesive composition for decorative films, each of which has a combination of good initial repositionability, high durability, and excellent resistance against whitening; and a molded body including the decorative film. The pressure-sensitive adhesive composition for decorative films of the present invention includes in a specific amount of: a (meth)acrylic copolymer (A) obtained by copolymerizing monomer components that contain an alkoxyalkyl (meth)acrylate monomer (a1) in an amount of 50% by mass or more and a carboxy group-containing monomer (a2) in an amount of 2% by mass or more; and a (meth)acrylic copolymer (B) obtained by copolymerizing monomer components that contain a nitrogen-containing monomer (b1) in an amount of 1 to 10% by mass, the (meth)acrylic copolymer (B) having a glass transition point of 0°C or higher.

**Description**

Technical Field

The present invention relates to a pressure-sensitive adhesive composition for decorative films, a decorative film obtained by using the pressure-sensitive adhesive composition for decorative films, and a molded body including the decorative film.

Background Art

In line with the recent trend of volatile organic compounds (VOC) reduction, automobile manufacturers are actively using decorative films including a pressure-sensitive adhesive layer in place of exterior coatings. The requirements of the pressure-sensitive adhesive used for this decorative film includes an initial repositionability. The initial repositionability refers to a performance capable of peeling off and repositioning pressure-sensitive adhesive decorative films in a case where positional deviation occurs during attaching them onto an adherend. Furthermore, the decorative films should not be peeled off after decorative molding, and are required to have high durability.

Patent Literature 1 discloses a decorative film including a pressure-sensitive adhesive layer containing a specific vinyl polymer and an acrylic pressure-sensitive adhesive polymer. Patent Literature 2 discloses a decoration film including: a pressure-sensitive adhesive layer containing a carboxy group-containing (meth)acrylic polymer and a (meth)acrylic polymer having an amino group capable of forming a metal complex with a metal ion derived from a metal substrate; and an acrylic resin film layer. The literatures teach that these decorative films or decoration films each have stable adhesive strength for a long period of time and are excellent in durability.

In the regions where hot and humid throughout the year, the pressure-sensitive adhesive layer is whitened during use, and has poor appearance in particular in a case where its substrate film is transparent or has low hiding power, and hence the pressure-sensitive adhesive layer of the decorative film is required to have resistance against whitening.

In the actual situation, however, there has not been found a pressure-sensitive adhesive for decorative films which has a good initial repositionability, a high durability, and an excellent resistance against whitening.

Citation List

Patent Literature

    Patent Literature 1: JP 2019-112574 A
    Patent Literature 2: JP 6574109 B2

Summary of Invention

Technical Problem

The present invention addresses the problem of providing: a pressure-sensitive adhesive composition for decorative films, and a decorative film obtained by using the pressure-sensitive adhesive composition for decorative films, each of which has a combination of good initial repositionability, high durability, and excellent resistance against whitening; and a molded body including the decorative film.

Solution to Problem

As a result of intensive studies to solve the above-described problem, the present inventor has found that the above-described problem can be solved by the compositions set forth below, and have completed the present invention. The present invention relates to, for example, the following [1] to [7].

    [1] A pressure-sensitive adhesive composition for decorative films, the pressure-sensitive adhesive composition including:

        a (meth)acrylic copolymer (A) obtained by copolymerizing monomer components containing an alkoxyalkyl (meth)acrylate monomer (a1) in an amount of 50% by mass or more and a carboxy group-containing monomer (a2) in an amount of 2% by mass or more; and

a (meth)acrylic copolymer (B) obtained by copolymerizing monomer components containing a nitrogen-containing monomer (b1) in an amount of 1 to 10% by mass, the (meth)acrylic copolymer (B) having a glass transition point of 0°C or higher, wherein

the (meth)acrylic copolymer (B) is contained in an amount of 2 parts by mass or more per 100 parts by mass of the (meth)acrylic copolymer (A).

[2] The pressure-sensitive adhesive composition for decorative films according to [1], wherein

the amount of the carboxy group-containing monomer (a2) in the monomer components included in the (meth)acrylic copolymer (A) is 2 to 10% by mass, and

the (meth)acrylic copolymer (B) is contained in an amount of 2 to 20 parts by mass per 100 parts by mass of the (meth)acrylic copolymer (A).

[3] A decorative film including: a pressure-sensitive adhesive layer formed of the pressure-sensitive adhesive composition for decorative films according to [1] or [2]; and a substrate layer.

[4] The decorative film according to [3], wherein the substrate layer includes at least one selected from the group consisting of polyvinyl chloride, polyethylene, polypropylene, polycarbonate, polymethyl methacrylate, and ABS.

[5] The decorative film according to [3] or [4], which is for vehicle interior parts or vehicle exterior parts.

[6] The decorative film according to any of [3] to [5], which is for vehicle exterior parts.

[7] A decorative molded body including the decorative film according to any of [3] to [6].

Advantageous Effects of Invention

According to the present invention, there can be provided: a pressure-sensitive adhesive composition for decorative films, and a decorative film obtained by using the pressure-sensitive adhesive composition for decorative films, each of which has a combination of good initial repositionability, high durability, and excellent resistance against whitening; and a molded body including the decorative film. The pressure-sensitive adhesive composition for decorative films of the present invention can be suitably used for a pressure-sensitive adhesive layer of a decorative film, and the decorative film obtained by using the pressure-sensitive adhesive composition is excellent in initial repositionability, durability and resistance against whitening. The decorative film according to the present invention can be used for surface decoration of various molded bodies, and can be particularly suitably utilized in decorative use for interior and exterior parts of vehicles such as automobiles and trains.

Description of Embodiments

Hereinafter, the present invention will be specifically described.

In the present invention, the term "(meth)acryl" is used to collectively refer to terms "acryl" and "methacryl". For example, the term "(meth)acrylic acid" means "acrylic acid" or "methacrylic acid". In the present invention, the wording "A to B" representing a numerical range means "A or more and B or less" unless otherwise specified.

<Pressure-sensitive adhesive composition for decorative films>

The pressure-sensitive adhesive composition for decorative films according to the present invention is a composition that contains: a (meth)acrylic copolymer (A); a (meth)acrylic copolymer (B); and, as necessary, another component.

(Meth)acrylic copolymer (A)

The (meth)acrylic copolymer (A) is a copolymer of monomer components containing an alkoxyalkyl (meth)acrylate monomer (a1) in an amount of 50% by mass or more and a carboxy group-containing monomer (a2) in an amount of 2% by mass or more, and is obtained by copolymerizing the above-mentioned monomer components.

The monomer component is usually a monomer that contains a polymerizable double bond.

<<Alkoxyalkyl (meth)acrylate monomer (a1)>>

The pressure-sensitive adhesive composition for decorative films according to the present invention contains the (meth)acrylic copolymer (A) in which a structural unit derived from an alkoxyalkyl (meth)acrylate monomer (a1) is included as a main component, whereby the pressure-sensitive adhesive layer obtained by using it has an increased water absorption, the moisture absorbed into the pressure-sensitive adhesive layer in an environment of high humidity is dispersed in the pressure-sensitive adhesive layer, and the whitening phenomenon resulted from the moisture can be suppressed. Therefore, even in a case where the decorative film according to the present invention is used in a usage exposed to the outside air, such as vehicle interior and exterior materials, the whitening phenomenon of the pressure-sensitive adhesive layer tends to be suppressed for a long period of time.

Moreover, the pressure-sensitive adhesive composition for decorative films according to the present invention contains the (meth)acrylic copolymer (A) in which a structural unit derived from an alkoxyalkyl (meth)acrylate monomer (a1) is included as a main component, whereby the resultant pressure-sensitive adhesive layer has a reduced wettability to the surface of an adherend, and the pressure-sensitive adhesion strength immediately after attaching can be kept low, so that the initial repositionability of the decorative film tends to be improved.

The number of carbon atoms of the alkoxyalkyl group in the alkoxyalkyl (meth)acrylate monomer (a1) is usually 2 to 18, preferably 2 to 12, and more preferably 2 to 10. Examples of the alkoxyalkyl (meth)acrylate monomer (a1) include: methoxymethyl (meth)acrylate, 2-methoxyethyl (meth)acrylate, 2-ethoxyethyl (meth)acrylate, 3-methoxypropyl (meth)acrylate, 3-ethoxypropyl (meth)acrylate, 4-methoxybutyl (meth)acrylate, and 4-ethoxybutyl (meth)acrylate.

The (meth)acrylic copolymer (A) can include structural units derived from one or more alkoxyalkyl (meth)acrylate monomers (a1).

The amount of the alkoxyalkyl (meth)acrylate monomer (a1) in all the monomer components used to obtain the (meth)acrylic copolymer (A) is 50% by mass or more, preferably 50 to 98% by mass, more preferably 50 to 97% by mass, still more preferably 55 to 96% by mass, and particularly preferably 60 to 95% by mass. When the amount of the alkoxyalkyl (meth)acrylate monomer (a1) is 50% by mass or more, the pressure-sensitive adhesive layer has an increased water absorption, and the moisture that has permeated into the pressure-sensitive adhesive layer can be dissolved and trapped in the pressure-sensitive adhesive layer, so that the resistance against whitening tends to be improved, and when the amount is 98% by mass or less, the pressure-sensitive adhesion strength is advantageously increased.

The (meth)acrylic copolymer (A) includes the structural unit derived from the alkoxyalkyl (meth)acrylate monomer (a1) in an amount of 50% by mass or more, preferably 50 to 98% by mass, more preferably 50 to 97% by mass, still more preferably 55 to 96% by mass, and particularly preferably 60 to 95% by mass. The amount of the structural unit can be grasped from, for example, the feed amount of the monomer component. The same applies to the amounts of other structural units.

<Carboxy group-containing monomer (a2)>

As the carboxy group-containing monomer (a2), there can be used without particular limitation a monomer that contains a carboxy group and a polymerizable double bond, and preferable examples thereof include: (meth)acrylic acid, itaconic acid, crotonic acid, fumaric acid, and maleic acid; an acid anhydride group-containing monomer such as phthalic anhydride and maleic anhydride; carboxy group-containing (meth)acrylates such as β-carboxyethyl (meth)acrylate, 5-carboxypentyl (meth)acrylate, succinic acid mono(meth)acryloyloxyethyl ester, and ω-carboxypolycaprolactone mono(meth)acrylate. Examples of the carboxy group-containing monomer (a2) include: a monomer containing an acid anhydride group that is ring-opened to yield a carboxy group.

The (meth)acrylic copolymer (A) can include structural units derived from one or more carboxy group-containing monomers (a2).

The amount of the carboxy group-containing monomer (a2) in all the monomer components used to obtain the (meth)acrylic copolymer (A) is 2% by mass or more, preferably 2 to 15% by mass, more preferably 2 to 12% by mass, still more preferably 3 to 10% by mass, further more preferably 4 to 10% by mass, and particularly preferably 5 to 8% by mass. The (meth)acrylic copolymer (A) includes the structural unit derived from the carboxy group-containing monomer (a2) in an amount of 2% by mass or more, preferably 2 to 15% by mass, more preferably 2 to 12% by mass, still more preferably 3 to 10% by mass, further more preferably 4 to 10% by mass, and particularly preferably 5 to 8% by mass.

By using the pressure-sensitive adhesive composition for decorative films containing the (meth)acrylic copolymer (A) obtained by copolymerizing the monomer composition containing the carboxy group-containing monomer (a2) in the amount described above, the pressure-sensitive adhesive layer of the resultant decorative film has a reduced wettability to the surface of the adherend, and the pressure-sensitive adhesion strength immediately after attaching can be kept low, so that the initial repositionability of the decorative film tends to be improved.

By using the pressure-sensitive adhesive composition for decorative films containing the (meth)acrylic copolymer (A) obtained by copolymerizing the carboxy group-containing monomer (a2) in the amount described above, the pressure-sensitive adhesive layer of the resultant decorative film tends to have an increased pressure-sensitive adhesion strength after a lapse of a certain period of time from the attaching to the adherend and to exhibit a high pressure-sensitive adhesion strength.

<Another monomer>

The (meth)acrylic copolymer (A) according to the present invention may include a structural unit derived from a monomer other than the monomers (a1) to (a2) described above. Examples of another monomer include: an alkyl (meth)acrylate, an alicyclic hydrocarbon group-containing (meth)acrylate or an aromatic hydrocarbon group-containing (meth)acrylate, an alkoxypolyalkylene glycol mono(meth)acrylate, a styrene-based monomer, a hydroxyl group-containing monomer, an amino group-containing monomer, an amide group-containing monomer, a nitrogen-based heterocycle-containing monomer, a cyano group-containing monomer, vinyl acetate, and a polymerizable macromonomer.

The number of carbon atoms of the alkyl group in the alkyl (meth)acrylate is preferably 1 to 20. Examples of the alkyl (meth)acrylate include: methyl (meth)acrylate, ethyl (meth)acrylate, n-propyl (meth)acrylate, iso-propyl (meth)acrylate, n-butyl (meth)acrylate, iso-butyl (meth)acrylate, tert-butyl (meth)acrylate, pentyl (meth)acrylate, hexyl (meth)acrylate, heptyl (meth)acrylate, 2-ethylhexyl (meth)acrylate, octyl (meth)acrylate, n-nonyl (meth)acrylate, iso-nonyl (meth)acrylate, n-decyl (meth)acrylate, iso-decyl (meth)acrylate, undeca(meth)acrylate, lauryl (meth)acrylate, oleyl (meth)acrylate, n-stearyl (meth)acrylate, and iso-stearyl (meth)acrylate.

Examples of the alicyclic hydrocarbon group-containing (meth)acrylate or aromatic hydrocarbon group-containing (meth)acrylate include: cyclohexyl (meth)acrylate, benzyl (meth)acrylate, and phenyl (meth)acrylate.

Examples of the alkoxy polyalkylene glycol mono(meth)acrylate include: methoxy diethylene glycol mono(meth)acrylate, methoxy dipropylene glycol mono(meth)acrylate, ethoxy triethylene glycol mono(meth)acrylate, ethoxy diethylene glycol mono(meth)acrylate, and methoxy triethylene glycol mono(meth)acrylate.

Examples of the styrene-based monomer include: styrene; an alkylstyrene such as methylstyrene, dimethylstyrene, trimethylstyrene, propylstyrene, butylstyrene, hexylstyrene, heptylstyrene, and octylstyrene; a halogenated styrene such as fluorostyrene, chlorostyrene, bromostyrene, and dibromostyrene; and a functionalized styrene such as nitrostyrene, acetylstyrene, and methoxystyrene.

Examples of the hydroxyl group-containing monomer include: a hydroxyl group-containing (meth)acrylate, for example, hydroxyalkyl (meth)acrylate such as 2-hydroxyethyl (meth)acrylate, 2-hydroxypropyl (meth)acrylate, 4-hydroxybutyl (meth)acrylate, 6-hydroxyhexyl (meth)acrylate, and 8-hydroxyoctyl (meth)acrylate.

Examples of the amino group-containing monomer include: N,N-dialkylaminoalkyl (meth)acrylate such as N,N-dimethylaminoethyl (meth)acrylate and N,N-diethylaminoethyl (meth)acrylate. Examples of the amide group-containing monomer include: N-alkyl (meth)acrylamide such as (meth)acrylamide, N-methyl (meth)acrylamide, N-ethyl (meth)acrylamide, N-propyl (meth)acrylamide, and N-hexyl (meth)acrylamide; N,N-dialkyl (meth)acrylamide such as N,N-dimethyl (meth)acrylamide and N,N-diethyl (meth)acrylamide. Examples of the nitrogen-based heterocycle-containing monomer include: N-vinylpyrrolidone, N-vinylcaprolactam, and (meth)acryloylmorpholine. Examples of the cyano group-containing monomer include: cyano (meth)acrylate and (meth)acrylonitrile.

Examples of the monomer of the polymer chain (main chain) portion included in the polymerizable macromonomer include: an alkyl (meth)acrylate such as methyl (meth)acrylate, ethyl (meth)acrylate, n-butyl (meth)acrylate, iso-butyl (meth)acrylate, and tert-butyl (meth)acrylate, wherein the number of carbon atoms of the alkyl group is preferably 1 to 20; (meth) acrylonitrile; and a styrene-based monomer such as styrene and α-methylstyrene. Preferable examples of the macromonomer include: a (meth)acrylic macromonomer, a (meth) acrylonitrile-based macromonomer, and a styrene-based macromonomer.

Among other monomers, an alkyl (meth)acrylate, an alicyclic hydrocarbon group-containing (meth)acrylate or an aromatic hydrocarbon group-containing (meth)acrylate, and a styrene-based monomer are preferable, and an alkyl (meth)acrylate is more preferable.

The (meth)acrylic copolymer (A) can include structural units derived from one or more other monomers.

The amount of other monomers in all the monomer components used to obtain the (meth)acrylic copolymer (A) is preferably 47% by mass or less, more preferably 41% by mass or less, and still more preferably 35% by mass or less. In the (meth)acrylic copolymer (A), the amount of structural units derived from other monomers is preferably 47% by mass or less, more preferably 41% by mass or less, and still more preferably 35% by mass or less.

<<Physical properties and production method of (meth)acrylic copolymer (A)>>

The weight average molecular weight (Mw) of the (meth)acrylic copolymer (A) as measured by gel permeation chromatography (GPC) is usually 200,000 to 2,000,000, preferably 400,000 to 1,500,000, and more preferably 500,000 to 1,000,000. According to such an embodiment, a pressure-sensitive adhesive excellent in high-temperature durability tends to be obtained.

The molecular weight distribution (Mw/Mn), which is the ratio of Mw to the number average molecular weight (Mn), of the (meth)acrylic copolymer (A) is typically 2 to 15, preferably 2.5 to 10, and more preferably 3 to 8. According to such an embodiment, a pressure-sensitive adhesive excellent in high-temperature durability tends to be obtained.

The Mw and Mw/Mn can be measured, for example, by the method described in Examples.

The glass transition temperature (Tg) of the (meth)acrylic copolymer (A) is usually -70°C or higher and lower than 0°C, and preferably -70 to -30°C. According to such an embodiment, a pressure-sensitive adhesive having an excellent adhesive strength at normal temperature tends to be obtained. The glass transition temperature can be calculated by so-called Fox equation. The same applies to the (meth)acrylic copolymer (B) described later.

$$\text{Fox equation: } 1/Tg = (W1/Tg1) + (W2/Tg2) + ...+ (Wm/Tgm)$$

$$W1 + W2 + ...+ Wm = 1$$

In the equation, Tg is the glass transition temperature (K) of the (meth)acrylic copolymer (A), Tg1, Tg2, ..., and Tgm each are the glass transition temperature (K) of the homopolymer formed from various monomers, and W1, W2, ..., and Wm each are the mass fraction of the structural unit derived from various monomers in the (meth)acrylic copolymer (A). As the mass fraction of the structural unit derived from each monomer, there can be used the feed ratio of each monomer to the total monomers in the copolymer synthesis.

In the calculation of the Fox equation, the values described in Polymer Handbook Fourth Edition (Wiley-Interscience 2003), for example, can be employed for the glass transition temperature (Tg) of the homopolymer formed from various monomers.

One type or two or more types of the (meth)acrylic copolymer (A) can be used.

The total content of the (meth)acrylic copolymer (A) and the (meth)acrylic copolymer (B) described later in the pressure-sensitive adhesive composition for decorative films according to the present invention is usually 60% by mass or more, preferably 65% by mass or more, and more preferably 70% by mass or more per 100% by mass of the solid content of the pressure-sensitive adhesive composition. The solid content refers to the components other than organic solvents.

The (meth)acrylic copolymer (A) can be produced by a known method, and is preferably produced by solution polymerization. Specifically, a monomer component and a polymerization solvent are put into a reaction vessel, a polymerization initiator is added thereto, and the mixture is heated up to a reaction temperature of about 50 to 90°C and allowed to react for 2 to 20 hours. For example, the polymerization is carried out under an inert gas atmosphere such as nitrogen gas. Note that, a polymerization initiator, a chain transfer agent, a monomer component, and/or a polymerization solvent may be appropriately added during the polymerization reaction.

Examples of the polymerization solvent include an organic solvent described later.

Examples of the polymerization initiator include: an organic polymerization initiator, and specific examples thereof include: a peroxide such as benzoyl peroxide and lauroyl peroxide; and an azo compound such as 2,2'-azobisisobutyronitrile. Among them, the azo compound is preferable. One type or two or more types of the polymerization initiators can be used.

The amount of the polymerization initiator used is usually 0.01 to 5 parts by mass per 100 parts by mass of the monomer component. According to such an embodiment, the Mw of the (meth)acrylic copolymer (A) can be adjusted within an appropriate range.

(Meth)acrylic copolymer (B)

The (meth)acrylic copolymer (B) is a copolymer obtained by copolymerizing monomer components containing a nitrogen-containing monomer, and has a glass transition temperature of 0°C or higher.

The pressure-sensitive adhesive composition for decorative films according to the present invention contains the (meth)acrylic copolymer (B) as a tackifier resin in a specific amount with respect to the (meth)acrylic copolymer (A), thereby making it possible to form a pressure-sensitive adhesive layer excellent in various performances such as resistance against whitening, pressure-sensitive adhesion, and initial repositionability.

<<Nitrogen-containing monomer (b1)>>

As the nitrogen-containing monomer (b1), there can be used without particular limitation a monomer that contains a nitrogen and a polymerizable double bond, and examples thereof include an amino group-containing monomer, an amide group-containing monomer, a nitrogen-based heterocycle-containing monomer, and a cyano group-containing monomer, and there can be preferably used an amino group-containing monomer, that is, a monomer that contains an amino group and a polymerizable double bond. Here, examples of the amino group include: a group represented by $-NH_2$; a group represented by -NHR; and a group represented by $-NR_2$. Here, R is, for example, an alkyl group.

Examples of the amino group-containing monomer include: N,N-dialkylaminoalkyl (meth)acrylate such as N,N-dimethylaminoethyl (meth)acrylate and N,N-diethylaminoethyl (meth)acrylate. Examples of the amide group-containing monomer include: N-alkyl (meth)acrylamide such as (meth)acrylamide, N-methyl (meth)acrylamide, N-ethyl (meth)acrylamide, N-propyl (meth)acrylamide, and N-hexyl (meth)acrylamide; N,N-dialkyl (meth)acrylamide such as N,N-dimethyl (meth)acrylamide and N,N-diethyl (meth)acrylamide. Examples of the nitrogen-based heterocycle-containing monomer include: N-vinylpyrrolidone, N-vinylcaprolactam, and (meth)acryloylmorpholine. Examples of the cyano group-containing monomer include: cyano (meth)acrylate and (meth)acrylonitrile.

Preferable examples of the nitrogen-containing monomer (b1) include: N,N-dialkylaminoalkyl (meth)acrylate such as N,N-dimethylaminoethyl (meth)acrylate and N,N-diethylaminoethyl (meth)acrylate. The number of carbon atoms of the dialkylaminoalkyl group in the N,N-dialkylaminoalkyl (meth)acrylate is preferably 3 to 20, and more preferably 3 to 10.

The amount of the nitrogen-containing monomer (b1) in all the monomer components used to obtain the (meth)acrylic copolymer (B) is preferably 1 to 10% by mass, more preferably 3 to 10% by mass, and still more preferably 5 to 10% by mass. The (meth)acrylic copolymer (B) contains the structural unit derived from the nitrogen-containing monomer (b1) preferably in an amount of 1 to 10% by mass, more preferably 3 to 10% by mass, and still more preferably 5 to 10% by mass.

In the pressure-sensitive adhesive composition for decorative films according to the present invention, the (meth)acrylic copolymer (B) having a high glass transition temperature, which is obtained by copolymerizing a nitrogen-containing monomer in the above-mentioned amount, is added to the (meth)acrylic copolymer (A), whereby the adhesion is moderately reduced, and the resultant decorative film can have an improved initial repositionability.

In addition, by the acid-base interaction between the carboxy group derived from the carboxy group-containing monomer (a2) in the (meth)acrylic copolymer (A) and the nitrogen-containing group such as the amino group derived from the nitrogen-containing monomer (b1) in the (meth)acrylic copolymer (B), the compatibility between the (meth)acrylic copolymer (A) as a base polymer and the (meth)acrylic copolymer (B) having a high glass transition temperature is increased, so that the resistance against whitening tends to be improved.

It is preferable that the amount of the nitrogen-containing monomer (b1) in all the monomer components used for obtaining the (meth)acrylic copolymer (B) is 10% by mass or less, since the resultant pressure-sensitive adhesive layer has an excellent resistance against whitening.

<<(Meth)acrylic acid ester (b2)>>

The (meth)acrylic copolymer (B) preferably further includes a structural unit derived from a (meth)acrylic acid ester (b2) (provided that, the (meth)acrylic acid ester corresponding to the nitrogen-containing monomer (b1) is excluded).

Examples of the (meth)acrylic acid ester (b2) include: an alkyl (meth)acrylate, an alicyclic hydrocarbon group-containing (meth)acrylate or an aromatic hydrocarbon group-containing (meth)acrylate, and an alkoxypolyalkylene glycol mono(meth)acrylate. Specific examples thereof include the monomers described in the section of <<Another monomer>> in the (meth)acrylic copolymer (A).

The amount of the (meth)acrylic acid ester (b2) in all the monomer components used to obtain the (meth)acrylic copolymer (B) is preferably 50 to 99% by mass, more preferably 60 to 97% by mass, and still more preferably 70 to 95% by mass. The (meth)acrylic copolymer (B) preferably includes the structural unit derived from the (meth)acrylic acid ester (b2) in an amount of 50 to 99% by mass, more preferably 60 to 97% by mass, and still more preferably 70 to 95% by mass.

<<Another monomer>>

The (meth)acrylic copolymer (B) may further include a structural unit derived from a monomer other than the above-described nitrogen-containing monomer (b1) and (meth)acrylic acid ester (b2).

Examples of another monomer include: a styrene-based monomer, an amide group-containing monomer, a nitrogen-based heterocycle-containing monomer, a cyano group-containing monomer, and vinyl acetate. Note that, the monomer corresponding to the (meth)acrylic acid ester (b2) is excluded.

<<Physical properties and production method of (meth)acrylic copolymer (B)>>

The weight average molecular weight (Mw) of the (meth)acrylic copolymer (B) as measured by GPC method is usually 10,000 to 50,000, preferably 10,000 to 40,000, and more preferably 15,000 to 30,000. According to such an embodiment, the (meth)acrylic copolymer (B) is less likely to be unevenly distributed in the pressure-sensitive adhesive layer, and a good miscible state tends to be obtained.

The molecular weight distribution (Mw/Mn) of the (meth)acrylic copolymer (B) is usually 2 to 15, preferably 2.5 to 10, and more preferably 3 to 8. According to such an embodiment, a good compatible state tends to be obtained.

The Mw and Mw/Mn can be measured, for example, by the method described in Examples.

The glass transition temperature (Tg) of the (meth)acrylic copolymer (B) is 0°C or higher, preferably 50 to 200°C, and more preferably 80 to 150°C. According to such an embodiment, a pressure-sensitive adhesive layer excellent in initial repositionability and durability of pressure-sensitive adhesion strength tends to be obtained. The glass transition temperature can be calculated by the so-called Fox equation described above.

One type or two or more types of the (meth)acrylic copolymer (B) can be used.

In the pressure-sensitive adhesive composition for decorative films of the present invention, the content of the (meth)acrylic copolymer (B) is 2 parts by mass or more, preferably 2 to 20 parts by mass, more preferably 3 to 17 parts by mass, still more preferably 3 to 15 parts by mass per 100 parts by mass of the (meth)acrylic copolymer (A). When the content of the (meth)acrylic copolymer (B) is 2 parts by mass or more, the adhesion is moderately reduced, and the initial repositionability tends to be improved, and when the content of the (meth)acrylic copolymer (B) is 20 parts by mass or less, a pressure-sensitive adhesive layer excellent in pressure-sensitive adhesion strength tends to be obtained.

The (meth)acrylic copolymer (B) can be produced by a known method, and is preferably produced by solution polymerization. As specific production conditions, for example, there can be referred to the production conditions described in the column of (meth)acrylic copolymer (A).

<Crosslinking agent (C)>

The pressure-sensitive adhesive composition for decorative films according to the present invention may contain a crosslinking agent (C) in addition to the aforementioned (meth)acrylic copolymer (A) and (meth)acrylic copolymer (B).

The crosslinking agent (C) is not particularly limited as long as it is a component capable of causing a crosslinking reaction with the (meth)acrylic copolymer (A). Examples of the crosslinking agent (C) include: an epoxy-based crosslinking agent (C1), a metal chelating crosslinker (C2), and an isocyanate-based crosslinking agent (C3).

One type or two or more types of the crosslinking agent (C) can be used.

In the pressure-sensitive adhesive composition for decorative films of the present invention, the content of the crosslinking agent (C) is preferably 0.01 to 5 parts by mass, more preferably 0.01 to 3 parts by mass, still more preferably 0.01 to 1 part by mass per 100 parts by mass of the (meth)acrylic copolymer (A). According to such an embodiment, there can be obtained a pressure-sensitive adhesive in which crosslinked structures are sufficiently and moderately formed, and which has a high cohesive strength, an excellent balance of pressure-sensitive adhesive properties, and an excellent durability.

<<Epoxy-based crosslinking agent (C1)>>

Examples of the epoxy-based crosslinking agent (C1) include: an epoxy compound having two or more epoxy groups in one molecule, and specific examples thereof include: ethylene glycol diglycidyl ether, polyethylene glycol diglycidyl ether, glycerin diglycidyl ether, glycerin triglycidyl ether, 1,3-bis(N,N-diglycidylaminomethyl)cyclohexane, N,N,N',N'-tetraglycidyl-m-xylylenediamine, N,N,N',N'-tetraglycidylaminophenylmethane, triglycidyl isocyanurate, m-N,N-diglycidylaminophenylglycidyl ether, N,N-diglycidyl toluidine, and N,N-diglycidyl aniline. The number of epoxy groups in one molecule in the epoxy compound is, for example, 2 to 10.

One type or two or more types of the epoxy-based crosslinking agent (C1) can be used.

<<Metal chelating crosslinker (C2)>>

Examples of the metal chelating crosslinker (C2) include: a compound in which a component such as an alkoxide, acetylacetone, or ethyl acetoacetate is coordinated to a polyvalent metal such as aluminum, iron, copper, zinc, tin, titanium, nickel, antimony, magnesium, vanadium, chromium, or zirconium. Among them, an aluminum chelate compound is preferable. Specific examples thereof include aluminum isopropylate, aluminum secondary butyrate, aluminum ethylacetoacetate diisopropylate, aluminum tris(ethyl acetoacetate), and aluminum tris(acetylacetonate).

One type or two or more types of the metal chelating crosslinker (C2) can be used.

<<Isocyanate-based crosslinking agent (C3)>>

Examples of the isocyanate-based crosslinking agent (C3) include an isocyanate compound having two or more isocyanate groups in one molecule.

Examples of the diisocyanate compound having two isocyanate groups in one molecule include: an aliphatic diisocyanate, an alicyclic diisocyanate, and an aromatic diisocyanate. Examples of the isocyanate compound having three or more isocyanate groups in one molecule include: an aromatic polyisocyanate, an aliphatic polyisocyanate, and an alicyclic polyisocyanate. Examples of the isocyanate compound include: a multimer (e.g., a dimer or trimer, a biuret, or an isocyanurate), a derivative (e.g., an addition reaction product of a polyhydric alcohol and two or more molecules of a diisocyanate compound), and a polymer of the isocyanate compound having two or more isocyanate groups.

One type or two or more types of the isocyanate-based crosslinking agent (C3) can be used.

<Additive>

In the pressure-sensitive adhesive composition for decorative films of the present invention, besides the above components, at least one selected from the group consisting of resin components (other than the (meth)acrylic copolymer (A) and the (meth)acrylic copolymer (B)), an antistatic agent, a silane coupling agent, an ultraviolet absorber, an antioxidant, a tackifier resin, a plasticizer, an antifoaming agent, a filler, a stabilizer, a softener, and a wettability modifier may be contained in an extent not impairing the effects of the present invention.

<Organic solvent>

The pressure-sensitive adhesive composition for decorative films of the present invention preferably contains an organic solvent in order its coating properties to be adjusted.

Examples of the organic solvent include: an aromatic hydrocarbon such as benzene, toluene, and xylene; an aliphatic hydrocarbon such as n-pentane, n-hexane, n-heptane, and n-octane; a cycloaliphatic hydrocarbon such as cyclopentane, cyclohexane, cycloheptane, and cyclooctane; an ether such as diethyl ether, diisopropyl ether, 1,2-dimethoxyethane, dibutyl ether, tetrahydrofuran, dioxane, anisole, phenylethyl ether, and diphenyl ether; a halogenated hydrocarbon such as chloroform, carbon tetrachloride, 1,2-dichloroethane, and chlorobenzene; an ester such as ethyl acetate, propyl acetate, butyl acetate, and methyl propionate; a ketone such as acetone, methyl ethyl ketone, diethyl ketone, methyl isobutyl ketone, and cyclohexanone; an amide such as N,N-dimethylformamide, N,N-dimethylacetamide, and N-methylpyrrolidone; a nitrile such as acetonitrile and benzonitrile; and a sulfoxide such as dimethyl sulfoxide and sulfolane.

One type or two or more types of organic solvents can be used.

In the pressure-sensitive adhesive composition for decorative films of the present invention, the percentage of the organic solvent content is usually 0 to 90% by mass, preferably 10 to 80% by mass.

<Pressure-sensitive adhesive composition for decorative films>

The pressure-sensitive adhesive composition for decorative films of the present invention is a composition that contains the (meth)acrylic copolymer (A) and the (meth)acrylic copolymer (B) described above, wherein the (meth)acrylic copolymer (B) is contained in an amount of 2 parts by mass or more per 100 parts by mass of the (meth)acrylic copolymer (A). The pressure-sensitive adhesive layer obtained from such a pressure-sensitive adhesive composition has a good initial repositionability, a high durability, and an excellent resistance against whitening.

In general, in a case of adding a dissimilar polymer into a base polymer, the compatibility between the polymers often becomes an issue. In a case where the compatibility between the polymers is poor, there is a concern of whitening the pressure-sensitive adhesive layer, and furthermore of deteriorating durability due to the bleeding out of one of the polymers.

However, in the pressure-sensitive adhesive composition for decorative films of the present invention, the (meth)acrylic copolymer (A) includes a structural unit derived from a carboxy group-containing monomer (a2), and the (meth)acrylic copolymer (B) includes a structural unit derived from a nitrogen-containing monomer such as an amino group-containing monomer, so that the (meth)acrylic copolymer (A) and the (meth)acrylic copolymer (B) exhibit good compatibility based on the acid-base interaction. For this reason, the pressure-sensitive adhesive composition for decorative films of the present invention has stability over a long period of time, and the resultant pressure-sensitive adhesive layer has the characteristics in which the initial repositionability is good, the durability is high, and the resistance against whitening is excellent.

<Method of producing pressure-sensitive adhesive composition for decorative films>

The pressure-sensitive adhesive composition for decorative films of the present invention can be produced by sequentially or simultaneously mixing the above-mentioned components in a known method.

That is, the pressure-sensitive adhesive composition of the present invention can be prepared by mixing the (meth)acrylic copolymer (A) and the (meth)acrylic copolymer (B), and if necessary, another component such as a crosslinking agent (C), an additive, or an organic solvent in a conventionally known method. In one embodiment, for example, there can be mentioned a method of mixing a polymer solution that contains an organic solvent and the polymer, which is obtained in the synthesis of the (meth)acrylic copolymer (A) and the (meth)acrylic copolymer (B), and, if necessary, blending another component such as a crosslinking agent (C), and/or an additive.

Decorative film

The decorative film of the present invention includes: a pressure-sensitive adhesive layer obtained from the above-described pressure-sensitive adhesive composition for decorative films; and a substrate layer. In the decorative film of the present invention, the substrate layer preferably plays a role of decoration, but the decorative film of the present invention may include a decoration layer. In the decorative film of the present invention, there may be provided on the pressure-sensitive adhesive layer a release film which protects the pressure-sensitive adhesive layer until use.

<<Pressure-sensitive adhesive layer>>

The pressure-sensitive adhesive layer of the decorative film of the present invention is formed of the above-described pressure-sensitive adhesive composition for decorative films of the present invention.
The pressure-sensitive adhesive layer can be obtained, for example, by applying the above-described pressure-sensitive adhesive composition for decorative films onto a substrate or a decorative layer, and then crosslinking the composition, as necessary. That is, by using a known method such as a spin coating method, a knife coating method, a roll coating method, a bar coating method, a blade coating method, a die coating method, or a gravure coating method, the pressure-sensitive adhesive composition for decorative films is applied so as to have a predetermined thickness, and then dried. Specifically, for example, the pressure-sensitive adhesive composition for decorative films is applied onto a substrate or a decorative layer, and then dried usually at 60 to 120°C, preferably 70 to 110°C, and usually for 1 to 10 minutes, preferably for 2 to 5 minutes, thereby forming a coating film. Subsequently, the coating film is cured (aged) usually for 1 day or longer, preferably for 2 to 10 days in an environment of usually 5 to 60°C, preferably 15 to 50°C, and usually 30 to 70% RH, preferably 40 to 70% RH. When crosslinking is performed under the aging conditions as described above, the crosslinked body (network polymer) can be formed in an efficient way.
The thickness of the pressure-sensitive adhesive layer is usually 3 to 1000 um, preferably 5 to 500 $\mu$m.

<<Substrate layer>>

The substrate layer is usually included as the outermost layer in a decorative molded body that is obtained by attaching a decorative film onto an adherend to be decorated. The substrate included in the substrate layer may be colored or colorless, and may be any of transparent, translucent, or opaque. The substrate layer is usually in the form of a film or a sheet, and may be in a single layer structure or may include a plurality of layers. In the present invention, the pressure-sensitive adhesive layer included in the decorative film exhibits an excellent resistance against whitening, so that a transparent or translucent substrate layer can be suitably used.
The substrate layer is not particularly limited, but is preferably made of a thermoplastic resin, and more preferably made of at least one selected from the group consisting of polyvinyl chloride, polyethylene, polypropylene, polycarbonate, polymethyl methacrylate, and ABS.
The substrate layer may contain, as necessary, a function-imparting substance such as inorganic particles (such as silica), a plasticizer, a colorant, and an ultraviolet absorber. A pattern, a character, or a picture, for example, for imparting a design may be printed on the surface of the substrate; or a pattern, a character, or a picture, for example, may be created inside the substrate.
The substrate layer is preferably in the form of a film or a sheet. The thickness of the substrate layer is usually 10 to 1000 um, preferably 20 to 200 $\mu$m, and more preferably 50 to 150 $\mu$m.

<<Decoration layer>>

The decorative film of the present invention may further include a decoration layer in between the substrate layer and the pressure-sensitive adhesive layer, or on the substrate layer. The decoration layer is a layer that is provided for imparting a design to the decorative film, and is a layer that expresses a pattern, a character, a picture, for example.

<<Release film>>

The decorative film according to the present invention may have, as necessary, a release film on the pressure-sensitive adhesive layer. The release film protects the surface of the pressure-sensitive adhesive layer until the decorative film is actually used, and is peeled off and removed at the time of using the decorative film. The release film is not particularly limited as long as it is a film that can be easily released from the pressure-sensitive adhesive layer, and there can be exemplified a resin film, and specific examples thereof include: a film of a polyester such as polyethylene terephthalate or polybutylene terephthalate; and a film of a polyolefin such as polyethylene, polypropylene, or ethylene-vinyl acetate copolymer. At least one surface of the release film may be treated so as to be an easy-releasable surface with use of a release treatment agent such as a silicone-based, a fluorine-based, a long-chain alkyl-based, or a fatty acid amide-based release treatment agent.

The thickness of the release film is usually 10 to 500 um, preferably 25 to 200 $\mu$m.

<<Method of producing decorative film>>

In the production of the decorative film of the present invention, there can be employed without particular limitation a method capable of forming a decorative film in which a pressure-sensitive adhesive layer made of the pressure-sensitive adhesive composition for decorative films of the present invention and a substrate layer are included. Examples of the method include: a method in which the pressure-sensitive adhesive composition for decorative films of the present invention is applied onto a substrate layer and then dried to form a pressure-sensitive adhesive layer; as necessary, a method in which a release film is further attached on the pressure-sensitive adhesive layer of the decorative film obtained by the method described above; and a method in which the pressure-sensitive adhesive composition for decorative films of the present invention is applied onto a release film and then dried to form a pressure-sensitive adhesive layer, and an exposed surface, which is not in contact with the release film, of the resultant pressure-sensitive adhesive layer is laminated on a substrate which will be a substrate layer, and then cured to form the decorative film.

The pressure-sensitive adhesive layer can be usually obtained by applying the pressure-sensitive adhesive composition for decorative films of the present invention described above onto the substrate included in the substrate layer or onto a release film, followed by drying. The drying condition is varied depending on the type of organic solvent contained in the composition, the thickness of the pressure-sensitive adhesive layer, for example, but the drying temperature is usually 50 to 150°C and the drying time is 1 to 10 minutes.

Examples of the coating method of the pressure-sensitive adhesive composition for decorative films include: a spin coating method, a knife coating method, a roll coating method, a bar coating method, a blade coating method, a die coating method, and a gravure coating method.

The curing condition is, for example, as follows. The curing is usually carried out for 1 day or longer, preferably for 2 to 10 days in an environment of usually 5 to 60°C, preferably 15 to 50°C, and usually 30 to 70% RH, preferably 40 to 70% RH. When crosslinking is carried out under this curing condition, the crosslinked body (network polymer) made from the (meth)acrylic copolymer (A) and the crosslinking agent (C) can be formed in an efficient way.

<<Usage/Decorative molded body>>

The decorative molded body of the present invention is a molded body as an adherend at least a part of whose surface the decorative film of the present invention is attached to.

Examples of the adherend of the decorative film of the present invention include a molded article such as an article having a three-dimensional shape, and an article having a three-dimensional curved surface is preferable. Specific examples thereof include: a vehicle body, a vehicle interior material, a building material, and a decorative panel. Note that, examples of the "vehicle" include: a four-wheeled vehicle such as a passenger car, a bus, and a truck; a two-wheeled vehicle such as a motorcycle, a scooter, and a motorized bicycle; and an electric train.

The decorative film of the present invention is particularly preferably used as a film for vehicles, specifically, a vehicle exterior film (e.g.: a car wrapping film). When a car wrapping film is attached to a vehicle body, a large film is often manually attached, and the film may be peeled off from the vehicle body after a long period of time from the attaching. The decorative film of the present invention is suitable as a car wrapping film because it is excellent in initial repositionability and removability as described above.

The material for forming the adherend is not particularly limited, and examples thereof include: a metal material; wood; and a plastic such as an acrylonitrile/butadiene/styrene resin, a polycarbonate resin, a polyester resin, a polypropylene resin, and a polyethylene resin, and the surface thereof may be painted.

Examples of the method of attaching the decorative film to a molded body as an adherend include: manual attachment, vacuum molding method, pressure molding method, and heat high-pressure molding method. Among them, vacuum molding method is preferable.

A decorative molded body of the present invention includes: a molded body (the adherend described above); and a substrate with a pressure-sensitive adhesive layer, which is disposed on the surface of the molded body and is obtained by removing a release film from the above-described decorative film. More specifically, the decorative molded body includes: a molded body; a pressure-sensitive adhesive layer; a decoration layer, as necessary; and a substrate in this order.

Examples

Hereinafter, the present invention will be described more specifically based on Examples, but the present invention is not limited to these Examples. In the following description of Examples, for example, unless otherwise specified, "part(s)" refers to "part(s) by mass".
Each measured value was obtained by the following method.

[Weight average molecular weight (Mw) and molecular weight distribution (Mw/Mn)]

For the (meth)acrylic copolymer, a weight average molecular weight (Mw) and a molecular weight distribution (Mw/Mn) in terms of standard polystyrene were determined by a gel permeation chromatography (GPC) method under the following conditions.

- Measuring apparatus: HLC-8220 GPC (manufactured by Tosoh Corporation)
- GPC column configuration: 5 columns set forth below (all of which were manufactured by Tosoh Corporation) (1) TSK-GEL HXL-H (a guard column); (2) TSK-GEL G7000HXL; (3) TSK-GEL GMHXL; (4) TSK-GEL GMHXL; and (5) TSK-GEL G2500HXL
- Sample concentration: 1.0 mg/cm$^3$ (diluted with tetrahydrofuran)
- Mobile phase solvent: tetrahydrofuran
- Flow rate: 1.0 cm$^3$/min
- Column temperature: 40°C

[Polymerization Example 1] (Production of (meth)acrylic copolymer (A-1))

Into a reactor equipped with a stirrer, a reflux condenser, a thermometer, and a nitrogen inlet tube were fed 92 parts of 2-methoxyethyl acrylate (MEA), 8 parts of acrylic acid (AA), and 200 parts of ethyl acetate, and the temperature was raised to 75°C while introducing nitrogen gas. Subsequently, 0.1 parts of 2,2'-azobisisobutyronitrile was added, and a polymerization reaction was carried out for 4 hours at 75 to 76°C under a nitrogen atmosphere. After completion of the reaction, the reaction liquid was diluted with ethyl acetate to prepare a polymer solution having a solid content concentration of 39% by mass. The Mw and the Mw/Mn of the resultant (meth)acrylic copolymer (A-1) were 700,000 and 7.5, respectively.

[Polymerization Examples 2 to 6]

Polymerization was carried out in the same manner as the method in Polymerization Example 1 except that the monomer compositions were changed as described in Table 1 (the unit of the compositions: parts by mass) to afford (meth)acrylic copolymers (A-2) to (A-3) and (A'-4) to (A'-6). The Tg, Mw, and Mw/Mn of each of the resultant (meth)acrylic copolymers are also shown in Table 1.

[Table 1]

Table 1

| | | (Meth) acrylic copolymer (A) and Copolymer for comparison | | | | | |
|---|---|---|---|---|---|---|---|
| Polymerization Example | | 1 | 2 | 3 | 4 | 5 | 6 |
| Copolymer | | A-1 | A-2 | A-3 | A'-4 | A'-5 | A'-6 |
| Composition | BA | - | 30 | - | 92 | - | - |
| | MEA | 92 | 62 | 97 | - | 99 | 92 |
| | HEA | - | - | - | - | - | 8 |
| | AA | 8 | 8 | 3 | 8 | 1 | - |
| Tg (°C) | | -42 | -44 | -47 | -46 | -49 | -48 |
| Mw (×10$^4$) | | 70 | 69 | 73 | 68 | 71 | 71 |

(continued)

|  | (Meth) acrylic copolymer (A) and Copolymer for comparison | | | | | |
|---|---|---|---|---|---|---|
| Polymerization Example | 1 | 2 | 3 | 4 | 5 | 6 |
| Copolymer | A-1 | A-2 | A-3 | A'-4 | A'-5 | A'-6 |
| Mw/Mn | 7.5 | 7.5 | 7.2 | 7.8 | 7.7 | 7.6 |
| BA: n-butyl acrylate<br>MEA: 2-methoxyethyl acrylate<br>HEA: 2-hydroxyethyl acrylate<br>AA: Acrylic acid | | | | | | |

[Polymerization Example 7]

Into a reactor equipped with a stirrer, a reflux condenser, a thermometer, and a nitrogen inlet tube were fed 95 parts of methyl methacrylate (MMA), 5 parts of N-dimethylaminoethyl methacrylate (DM), 1 part of N-dodecyl mercaptan as a chain transfer agent, and 100 parts of ethyl acetate, and the temperature was raised to 75°C while introducing nitrogen gas. Subsequently, 0.1 parts of 2,2'-azobisisobutyronitrile was added, and a polymerization reaction was carried out for 4 hours at 75 to 76°C under a nitrogen atmosphere. After completion of the reaction, the reaction liquid was diluted with ethyl acetate to prepare a polymer solution having a solid content concentration of 45% by mass. The Tg, the Mw and the Mw/Mn of the resultant (meth)acrylic copolymer (B-1) were 102°C, 15,000 and 4.5, respectively.

[Polymerization Example 8]

Polymerization was carried out in the same manner as the method in Polymerization Example 7 except that the monomer compositions were changed as described in Table 2 (the unit of compositions: parts by mass) to afford a (meth)acrylic copolymer (B'-2).

[Table 2]

Table 2

|  |  | (Meth) acrylic copolymer (B) and Copolymer for comparison | |
|---|---|---|---|
| Polymerization Example | | 7 | 8 |
| Copolymer | | B-1 | B'-2 |
| Composition | BA | - | 95 |
|  | MMA | 95 | - |
|  | DM | 5 | 5 |
| Tg (°C) | | 102 | -55 |
| Mw | | 15,000 | 16,000 |
| Mw/Mn | | 4.5 | 4.4 |
| BA: n-butyl acrylate<br>MMA: Methyl methacrylate<br>DM: 2-(dimethylamino)ethyl methacrylate | | | |

[Example 1]

Into the polymer solution of the (meth)acrylic copolymer (A-1) obtained in Polymerization Example 1, the polymer solution of the (meth)acrylic copolymer (B-1) obtained in Polymerization Example 7 and an epoxy-based compound "E-AX" as a crosslinking agent were added and mixed to afford a pressure-sensitive adhesive composition. Their blending quantities are such that the amount of the (meth)acrylic copolymer (B-1) is 10 parts and the solid content in the epoxy-based compound "E-AX" is 0.045 parts per 100 parts of the (meth)acrylic copolymer (A-1).

Next, by using the obtained pressure-sensitive adhesive composition, a pressure-sensitive adhesive sheet sample was prepared as follows, and the initial repositionability, the resistance against whitening, and the durability were measured or evaluated. The results are shown in Table 3.

[Preparation of pressure-sensitive adhesive sheet sample]

The pressure-sensitive adhesive composition was applied onto a releasable PET film, and then dried at 90°C for 4 minutes to form a pressure-sensitive adhesive layer having a thickness of 25 um. Thereafter, the pressure-sensitive adhesive layer was laminated on a PET film substrate having a thickness of 25 μm, followed by aging at 40°C for 3 days to prepare an adhesive sheet.

[Ball tack (Initial repositionability)]

The measurement was carried out by J. Dow method. Specifically, the releasable PET film was peeled off from the prepared pressure-sensitive adhesive sheet, and the pressure-sensitive adhesive sheet was attached to an inclined surface having an inclination angle of 30 degrees in such a way that the pressure-sensitive adhesive layer was exposed. Next, a steel ball was allowed for an approach run from the upper part of the inclined surface under an environment of 23°C/65% RH, followed by sliding on the pressure-sensitive adhesive surface (pressure-sensitive adhesive layer surface). At this test, the distance of approach run was set to 10 cm, and the sliding distance was set to 10 cm. Sliding tests were conducted with steel balls of a different diameter, thereby determining the maximum diameter of the steel ball that has stopped sliding within the pressure-sensitive adhesive surface. Note that, the diameter of the steel ball used was X/32 inches (where X is an integer of 1 to 32), and the numerical values shown in Table 3 indicate the values of X. The determination criteria are as follows.

Determination criteria

AA: 2 to 4 (the tack is low, and the repositionability is good)
BB: 5 to 9 (slightly tacky, but within a range where no problem in use)
CC: 10 or more (the tack is high, and there is a problem in the repositionability)

[Resistance against whitening]

The prepared pressure-sensitive adhesive sheet was cut into a size of 60 mm × 50 mm, the releasable PET film was peeled off, and the exposed pressure-sensitive adhesive layer was adhered on a glass plate (an adherend), and then was held for 20 minutes in an autoclave adjusted to 50°C and 5 atmospheres to prepare a test plate, and the degree of whitening was measured with a haze meter (Model name: "HM-150", manufactured by Murakami Color Research Laboratory) and the measured value was defined as an initial haze. Thereafter, the test plate was left under a condition of 85°C/85% RH for 72 hours, and the degree of whitening was measured with the haze meter (Model name: "HM-150", manufactured by Murakami Color Research Laboratory) and the measured value was defined as a haze after endurance. The measurement results and the determination results are shown in Table 3.

Determination criteria

AA: The difference in haze between before and after the heat - moisture treatment was less than 0.5.
BB: The difference in haze between before and after the heat - moisture treatment was 0.5 or more and less than 1.0.
CC: The difference in haze between before and after the heat - moisture treatment was 1.0 or more.

[Durability Test]

The produced pressure-sensitive adhesive sheet was cut into a size of 25 mm × 100 mm, the releasable PET film was peeled off, and the exposed pressure-sensitive adhesive layer was adhered on a polycarbonate plate. Next, the sample plate was held in an autoclave adjusted to 50°C and 5 atmospheres for 20 minutes so as to be pressure-bonded. Thereafter, the sample plate was left in an environment of 85°C/85% RH for 1000 hours, followed by observation of the appearance. The determination results are shown in Table 3.

Determination criteria

AA: Neither foaming nor peeling off was observed.
BB: A slight foaming and/or peeling off was observed, but no problem in use.
CC: Remarkable foaming and/or peeling off was observed.

[Examples 2 to 5, Comparative Examples 1 to 6]

The pressure-sensitive adhesive compositions were obtained in the same manner as the method in Example 1 except that the formulations were changed as shown in Table 3. In Table 3, the amount of each component is the amount (parts by mass) per 100 parts of the (meth)acrylic copolymer (A) or a copolymer for comparison corresponding thereto. The amount of the crosslinking agent in Table 3 is the amount of the solid content. Note that in Table 3, "Y-75" represents an isocyanate-based compound.
Next, by using each resultant pressure-sensitive adhesive composition, a pressure-sensitive adhesive sheet sample was prepared in the same manner as the method in Example 1, and the initial repositionability, the resistance against whitening, and the durability were measured or evaluated. The results are shown in Table 3.

[Table 3]

Table 3

| | | Ex. 1 | Ex. 2 | Ex. 3 | Ex. 4 | Ex. 5 |
|---|---|---|---|---|---|---|
| (Meth)acrylic copolymer (A) | | A-1 | A-2 | A-3 | A-1 | A-1 |
| (Meth)acrylic copolymer (B) | B-1 | 10 | 10 | 10 | 3 | 15 |
| | B'-2 | – | – | – | – | – |
| Crosslinking agent | Y-75 | – | – | – | – | – |
| | E-AX | 0.045 | 0.045 | 0.045 | 0.045 | 0.045 |
| Initial repositionability | Ball Tack | 3 | 5 | 3 | 5 | Less than 2 |
| | Determination | AA | BB | AA | BB | AA |
| Resistance against whitening | Haze (initial) | 1.1 | 1.1 | 1.1 | 1.1 | 1.1 |
| | Haze (after endurance) | 1.4 | 1.6 | 1.4 | 1.4 | 1.4 |
| | Haze (difference) | 0.3 | 0.5 | 0.3 | 0.3 | 0.3 |
| | Determination | AA | BB | AA | AA | AA |
| Durability | Determination | AA | AA | BB | BB | AA |

Table 3 (continued)

| | | Comp. Ex. 1 | Comp. Ex. 2 | Comp. Ex. 3 |
|---|---|---|---|---|
| (Meth)acrylic copolymer (A) | | A'-4 | A'-5 | A'-6 |
| (Meth)acrylic copolymer (B) | B-1 | 10 | 10 | 10 |
| | B'-2 | – | – | – |
| Crosslinking agent | Y-75 | – | – | 0.7 |
| | E-AX | 0.045 | 0.045 | – |
| Initial repositionability | Ball Tack | Less than 2 | 10 | 15 |
| | Determination | AA | CC | CC |
| Resistance against whitening | Haze (initial) | 1.1 | 1.1 | 1.1 |
| | Haze (after endurance) | 5.4 | 1.3 | 1.4 |
| | Haze (difference) | 4.2 | 0.2 | 0.3 |
| | Determination | CC | AA | AA |
| Durability | Determination | AA | CC | CC |

Table 3 (continued)

|  | | Comp. Ex. 4 | Comp. Ex. 5 | Comp. Ex. 6 |
|---|---|---|---|---|
| (Meth)acrylic copolymer (A) | | A-1 | A-1 | A-1 |
| (Meth)acrylic copolymer (B) | B-1 | – | – | 1 |
| | B'-2 | 10 | – | – |
| Crosslinking agent | Y-75 | – | – | – |
| | E-AX | 0.045 | 0.045 | 0.045 |
| Initial repositionability | Ball Tack | 18 | 30 | 25 |
| | Determination | CC | CC | CC |
| Resistance against whitening | Haze (initial) | 1.1 | 1.1 | 1.1 |
| | Haze (after endurance) | 1.4 | 1.4 | 1.4 |
| | Haze (difference) | 0.3 | 0.3 | 0.3 |
| | Determination | AA | AA | AA |
| Durability | Determination | CC | CC | CC |

Y-75:   Isocyanate-based compound (an isocyanate-based crosslinking agent: manufactured by Soken Chemical & Engineering Co.,Ltd., an isocyanurate of hexamethylene diisocyanate: solid content 75%, an ethyl acetate solution)
E-AX:   Epoxy-based compound (an epoxy crosslinking agent: manufactured by Soken Chemical & Engineering Co.,Ltd., a tetrafunctional epoxy compound; solid content 5%, a toluene-isopropyl alcohol solution)

A comparison between Example 1 and Comparative Example 1 shows that the resistance against whitening is improved in the case of using the (meth)acrylic copolymer (A) that contains the structural unit derived from the alkoxyalkyl (meth)acrylate monomer (a1).

A comparison of Example 1 with Comparative Examples 2 and 3 shows that the initial repositionability and the durability are improved in the case of using the (meth)acrylic copolymer (A) in which the structural unit derived from the carboxy group-containing monomer (a2) is contained in an amount of 2% by mass or more.

A comparison of Examples 1 to 3 with Comparative Examples 1 to 3 shows that the initial repositionability, the resistance against whitening, and the durability are improved by using the (meth)acrylic copolymer (A) in which the structural unit derived from the alkoxyalkyl (meth)acrylate monomer (a1) is contained in an amount of 50% by mass or more and the carboxy group-containing monomer (a2) is contained in an amount of 2% by mass or more.

A comparison between Example 1 and Comparative Example 4 shows that initial repositionability and the durability are improved in the case of using the (meth)acrylic copolymer (B) having a high glass transition temperature (Tg) of 0°C or higher.

A comparison of Examples 1 and 4 with Comparative Examples 5 and 6 shows that the initial repositionability and the durability are improved in the case where the (meth)acrylic copolymer (B) is used in an amount of 2 parts by mass or more per 100 parts by mass of the (meth)acrylic copolymer (A).

It is found from what has been said that a pressure-sensitive adhesive layer excellent in initial repositionability, resistance against whitening and durability can be formed by using the pressure-sensitive adhesive composition in which the (meth)acrylic copolymer (B) having a high glass transition temperature (Tg) of 0°C or higher is contained in a specific amount with respect to the (meth)acrylic copolymer (A) that contains the structural unit derived from the alkoxyalkyl (meth)acrylate monomer (a1) in an amount of 50% by mass or more and the carboxy group-containing monomer (a2) in an amount of 2% by mass or more.

Industrial Applicability

The pressure-sensitive adhesive composition for decorative films of the present invention is suitable for forming a pressure-sensitive adhesive layer of a decorative film. The decorative film of the present invention is suitably used for surface decoration of molded bodies such as vehicle bodies, vehicle interior materials, building materials, and decorative plates, and can be particularly preferably used as films for vehicles, specifically, car wrapping films, and vehicle exterior films.

**Claims**

1.   A pressure-sensitive adhesive composition for decorative films, the pressure-sensitive adhesive composition comprising:

a (meth)acrylic copolymer (A) obtained by copolymerizing monomer components containing an alkoxyalkyl (meth)acrylate monomer (a1) in an amount of 50% by mass or more and a carboxy group-containing monomer (a2) in an amount of 2% by mass or more; and
a (meth)acrylic copolymer (B) obtained by copolymerizing monomer components containing a nitrogen-containing monomer (b1) in an amount of 1 to 10% by mass, the (meth)acrylic copolymer (B) having a glass transition point of 0°C or higher, wherein
the (meth)acrylic copolymer (B) is contained in an amount of 2 parts by mass or more per 100 parts by mass of the (meth)acrylic copolymer (A).

2.   The pressure-sensitive adhesive composition for decorative films according to claim 1, wherein

the amount of the carboxy group-containing monomer (a2) in the monomer components included in the (meth)acrylic copolymer (A) is 2 to 10% by mass, and
the (meth)acrylic copolymer (B) is contained in an amount of 2 to 20 parts by mass per 100 parts by mass of the (meth)acrylic copolymer (A).

3.   A decorative film comprising: a pressure-sensitive adhesive layer formed of the pressure-sensitive adhesive composition for decorative films according to claim 1 or 2; and a substrate layer.

4.   The decorative film according to claim 3, wherein the substrate layer includes at least one selected from the group consisting of polyvinyl chloride, polyethylene, polypropylene, polycarbonate, polymethyl methacrylate, and ABS.

5.   The decorative film according to claim 3 or 4, wherein the decorative film is for vehicle interior parts or exterior parts.

6.   The decorative film according to any one of claims 3 to 5, wherein the decorative film is for vehicle exterior parts.

7.   A decorative molded body comprising the decorative film according to any one of claims 3 to 6.

## INTERNATIONAL SEARCH REPORT

| International application No. |
|---|
| **PCT/JP2021/025423** |

### A. CLASSIFICATION OF SUBJECT MATTER

*B29C 51/14*(2006.01)i; *B32B 27/00*(2006.01)i; *C09J 133/14*(2006.01)i; *C09J 7/22*(2018.01)i; *C09J 7/38*(2018.01)i
FI:   C09J133/14; C09J7/38; C09J7/22; B32B27/00 E; B29C51/14

According to International Patent Classification (IPC) or to both national classification and IPC

### B. FIELDS SEARCHED

Minimum documentation searched (classification system followed by classification symbols)

B29C51/14; B32B27/00; C09J133/14; C09J7/22; C09J7/38

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2017-008222 A (3M INNOVATIVE PROPERTIES CO.) 12 January 2017 (2017-01-12) claims, paragraphs [0038]-[0053], [0076]-[0104] | 1-7 |
| Y | WO 2019/013130 A1 (SOKEN CHEMICAL & ENGINEERING CO., LTD.) 17 January 2019 (2019-01-17) claims, paragraph [0026] | 1-7 |
| Y | JP 2018-159019 A (SOKEN CHEMICAL & ENGINEERING CO., LTD.) 11 October 2018 (2018-10-11) claims, paragraph [0038] | 1-7 |
| Y | WO 2019/150728 A1 (TOAGOSEI CO., LTD.) 08 August 2019 (2019-08-08) claims, paragraph [0054] | 1-7 |
| A | JP 2010-077287 A (NITTO DENKO CORP.) 08 April 2010 (2010-04-08) entire text | 1-7 |
| A | JP 10-158616 A (CHUO RIKA KOGYO CORP.) 16 June 1998 (1998-06-16) entire text | 1-7 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 September 2021** | **05 October 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2021/025423**

| Patent document cited in search report | | | Publication date (day/month/year) | Patent family member(s) | | | Publication date (day/month/year) |
|---|---|---|---|---|---|---|---|
| JP | 2017-008222 | A | 12 January 2017 | (Family: none) | | | |
| WO | 2019/013130 | A1 | 17 January 2019 | TW | 201908449 | A | |
| JP | 2018-159019 | A | 11 October 2018 | CN | 108624251 | A | |
| | | | | KR | 10-2018-0108445 | A | |
| | | | | TW | 201840783 | A | |
| WO | 2019/150728 | A1 | 08 August 2019 | (Family: none) | | | |
| JP | 2010-077287 | A | 08 April 2010 | US | 2010/0080991 | A1 | |
| | | | | full text | | | |
| | | | | EP | 2169024 | A1 | |
| | | | | CN | 101684394 | A | |
| JP | 10-158616 | A | 16 June 1998 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019112574 A

- JP 6574109 B

**Non-patent literature cited in the description**

- Polymer Handbook. Wiley-Interscience, 2003